# EUROPÄISCHE PATENTSCHRIFT

(11) **EP 0 330 904 B1**
(45) Veröffentlichungstag und Bekanntmachung des Hinweises auf die Patenterteilung: **20.04.1994**
(21) Anmeldenummer: 89102539.7
(22) Anmeldetag: 15.02.1989
(51) Int. Cl.: A01N 43/88

(54) **Herbizide Mittel in Form von wässrigen Mikroemulsionen**
Herbicidal agent in the form of aqueous microemulsions
Agent herbicide sous forme de micro-émulsions aqueuses

(30) Priorität: 27.02.1988 DE 3806294
(43) Veröffentlichungstag der Anmeldung: 06.09.1989
(73) Patentinhaber: HOECHST AKTIENGESELLSCHAFT, 65926 Frankfurt am Main (DE)
(72) Erfinder: Heinrich, Rudolf, Dr., D-6233 Kelkheim (Taunus) (DE); Albrecht, Konrad, Dr., D-6233 Kelkheim (Taunus) (DE); Schumacher, Hans, Dr., D-6093 Flörsheim am Main (DE)

(56) Entgegenhaltungen:
- EP-A- 0 043 349
- EP-A- 0 244 754

## Beschreibung

Gegenstand der Erfindung sind herbizide Mittel in Form von konzentrierten Mikroemulsionen, die als herbizide Wirkstoffe einen Phenoxyphenoxy- oder Heteroaryloxyphenoxycarbonsäureester und ein Salz des Wirkstoffes Bentazon (= 3-Isopropyl-1H-benzo-2,1,3-thiadiazin-4-on 2,2 dioxid) enthalten.

Es ist bekannt und in EP-A 118,759 (CA-1,227,353) beschrieben, daß Lösungen von Phenoxy-phenoxy-carbonsäuren und deren Derivaten in aromatischen Lösungsmitteln mit Hilfe von endständig phosphorylierten Ethylenoxid-Propylenoxid-Ethylenoxid-Blockcopolymeren in wäßriger Phase zu milchig-weißen konzentrierten Emulsionen formuliert werden können.

In "The Pesticide Manual", 8. Aufl., S. 63 u. 64 ist ferner beschrieben, daß Bentazon in Form seiner Salze mit den Salzen von MCPA, MCPB, Dichlorprop oder CMPP als wäßrige Formulierung (SL) kombiniert werden kann. Dort werden auch Suspensionskonzentrate von Bentazon mit Dichlorprop und Isoproturon oder von Bentazon mit Atrazin sowie emulgierbare Konzentrate von Bentazon mit Propanil oder Spritzpulver-Formulierungen von Bentazon mit Cyanazin und Dichlorprop genannt.

Stabile Formulierungen von Bentazon-Salzen mit einem Phenoxy (oder Heteroaryl)-phenoxycarbonsäureester wie Diclofop-methyl oder Fenoxaprop-ethyl waren jedoch bisher nicht herstellbar. Diese Wirkstoffe werden nach den bekannten Verfahren in der Weise kombiniert, daß man der Spritzbrühe kurz vor der Applikation des Bentazons entsprechende Anteile eines emulgierbaren Konzentrates des Kombinationspartners hinzugibt. Dieses Verfahren ist jedoch umständlich, zeitraubend und kann in der Praxis leicht zu Fehldosierungen führen.

Es stellte sich daher die Aufgabe, eine wäßrige Bentazon-Salz-Lösung mit einer Lösung eines Phenoxy (oder Heteroaryloxy) phenoxycarbonsäureesters in einem organischen Lösungsmittel in einer gemeinsamen Formulierung zu kombinieren. Die Schwierigkeiten bei der Lösung dieser Aufgabe bestand darin, die spezifischen schweren wäßrigen Lösungen der Bentazon-Salze (d₂₀ ≧ 1,24 g/ml) mit dem in Wasser praktisch unlöslichen und nur in organischen Lösungsmitteln gelösten Carbonsäureestern (d₂₀ ≦ 1 g/ml) zu einer homogenen physikalisch und chemisch stabilen Zubereitung zu formulieren, wobei Phasentrennungen oder Koagulationserscheinungen zu verhindern waren.

Es zeigte sich, daß die in EP-A 118 759 (CA 1,227,353) beschriebenen endständig phosphorylierten Ethylenoxid-Propylenoxid-Ethylenoxid-Block-Copolymerisate sowie die in EP-A 47 396 (GB-A 2,115,285) beschriebenen wasserlöslichen Dispergatoren vom Typ der phosphorylierten Alkylarylpolyethylenoxide nach der dort beschriebenen Vorgehensweise nicht zum Ziele führten. Die mit diesen Emulgatoren erhaltenen Produkte waren milchig bis leicht durchscheinend und zeigten bereits nach wenigen Stunden Phasentrennung.

Ähnliche Probleme wurden mit den in EP-A 33 291 beschriebenen phosphorylierten Polystyrylphenylpolyethylenoxiden beobachtet. Ferner ließen sich mit den in DE-A 3 111 934 (US-A 4,500,348) beschriebenen Alkylarylpolyglykolether-Verbindungen nur kolloide Emulsionen erhalten.

Überraschenderweise wurde nun gefunden, daß bei Verwendung von ausgewählten Emulgatoren mit den obengenannten Wirkstoffen transparente Mikroemulsionen hergestellt werden können, die auch nach längerer Lagerung sowohl in der Kälte als auch bei höheren Temperaturen physikalisch und chemisch stabil bleiben und keine Inhomogenitäten zeigen.

Gegenstand der vorliegenden Erfindung sind daher herbizide Mittel auf der Basis wäßriger konzentrierter Mikroemulsionen, dadurch gekennzeichnet, daß sie
a) einen herbiziden Phenoxyphenoxy- oder Heteroaryloxyphenoxy-carbonsäureester und ein Salz des Herbizids Bentazon (3-Isopropyl-1H-benzo-2,1,3-thiadiazin-4-on 2,2-dioxid) als Wirkstoffe;
b) ein oder mehrere Emulgatoren oder Netzmittel der Gruppe dodecylbenzolsulfonsaures Calcium, ethoxyliertes Rizinusöl, der ethoxylierten Nonylphenole, der Alkanolpolyglykolether oder der Fettsäurepolyglykolester,
c) ein oder mehrere organische Lösungsmittel aus der Gruppe der Aromaten oder Ketone und
d) Wasser enthalten.

Als Salze des Bentazons Werden erfindungsgemäß insbesondere die Alkali (Na,K)-, Ammonium- oder Alkylammoniumsalze eingesetzt.

Als herbizide Phenoxy (oder Heteraryloxy)-phenoxycarbonsäureester werden die bekannten substituierten Phenoxyphenoxy-, Chinoxalyloxyphenoxy-, Pyridyloxyphenoxy-, Benzoxazolyloxyphenoxy- oder Benzthiazolyloxyhenoxycarbonsäureester, in Form der reinen optischen Isomeren oder als Isomerengemische (z.B. Racemate) eingesetzt. Die Verbindungen sind beispielsweise in DE-A 2,136,828, (US-A 4,238,626); DE-A 2,223,894, (US-A 3,954,442); GB-PS 2,042,539; GB-PS 1,599,121; DE-A 2,640,730 (US-A 4,130,413) beschrieben. In Frage kommen insbesondere die (C₁-C₄)Alkyl-, (C₂-C₄)Alkenyl- oder (C₃-C₄)Alkinyl-ester.

Von diesen Herbiziden sind insbesondere zu nennen die Wirkstoffe
2-(4-(2,4-Dichlorphenoxy)-phenoxy)-propionsäuremethylester (Diclofop-methyl),
2-(4-(4-Brom-2-chlorphenoxy)-phenoxy)-propionsäuremethylester,
2-(4-(4-Trifluormethylphenoxy)-phenoxy)-propionsäuremethylester,
2-(4-(2-Chlor-4-trifluormethylphenoxy)-phenoxy)-propionsäuremethylester,
4-(4-(4-Trifluormethylphenoxy)-phenoxy)pent-2-en-säureethylester,
2-(4-(3,5-Dichlorpyridyl-2-oxy)-phenoxy)-propionsäureethylester,
2-(4-(3-Chlor-5-trifluormethyl-pyridyl-2-oxy)-phenoxypropionsäure-methyl- oder 2-Ethoxyethylester (Haloxyfopmethyl oder Haloxyfop-2-ethoxy-ethyl),
2-(4-(3,5-Dichlorpyridyl-2-oxy)-phenoxy)-propionsäurepropargylester,
2-(4-(6-Chlorbenzoxazol-2-yl-oxy)-phenoxy)-propionsäureethylester (Fenoxaprop-ethyl),
2-(4-(6-Chlorbenzthiazol-2-yl-oxy)-phenoxy)-propionsäureethylester (Fenthiaprop-ethyl),
2-(4-(3-Chlor-5-trifluormethyl-2-pyridyloxy)-phenoxy)-propionsäuremethylester,
2-(4-(5-Trifluormethyl-2-pyridyloxy-)-phenoxy-propionsäurebutylester (Fluazifop-butyl),
2-(4-(6-Chlor-2-chinoxalyloxy)-phenoxy-propionsäureethylester (Quizalofop-ethyl),
2-(4-(6-Fluor-2-chinoxalyloxy)-phenoxy)-propionsäureethylester.

Hierzu sind erfindungsgemäß insbesondere die Wirkstoffe Diclofop-methyl und Fenoxaprop-ethyl von Bedeutung. Die oben genannten Wirkstoffe sind zum großen Teil in "The Pesticide Manual" 8. Aufl. 1987, British Crop Protection Council beschrieben.

Das erfindungsgemäß zu verwendende ethoxylierte Ricinusöl enthält insbesondere 20 bis 60 EO-Einheiten (EO= Ethylenoxid). Beispielsweise können die Produkte ®Emulsogen 400 oder ®Emulsogen 360 (Fa. Hoechst AG) eingesetzt werden. Die ethoxylierten Nonylphenole enthalten 20-200 EO. Zu diesen zählt beispielsweise ®Arkopal N 100 (Fa. Hoechst AG). Als Alkanolpolyglykolether sind bevorzugt ethoxylierte (C₈-C₂₀)Alkanole mit einem EO-Gehalt von 3 bis 20 EO, z.B. ®Genapol X 060 (Fa. Hoechst AG) zu nennen. Die Fettsäurepolyglykolester enthalten insbesondere 12-18 C-Atome im Fettsäureteil. Von den genannten Emulgatoren eignen sich erfindungsgemäß am besten ethoxyliertes Rizinusöl und die Alkanolpolyglykolether.

Darüberhinaus können den erfindungsgemäßen Formulierungen weitere übliche anionische oder nichtionische Emulgatoren oder Netzmittel, wie z.B. Alkyl-biglykolethersulfat-Na-Salze in geringen Mengen (bis zu 10 %) hinzugesetzt werden, ohne daß sich die Eigenschaften der Formulierungen wesentlich verändern.

Als aromatische Lösungsmittel eignen sich beispielsweise Toluol, Xylole, höher siedende Aromatenfraktionen, Methylnaphthaline, als Ketone insbesondere Cyclohexanon.

Die erfindungsgemäßen Pflanzenschutzmittel-Kombinationen enthalten einen Gesamtwirkstoffanteil von 5-50 Gew.-%, bevorzugt 20-35 Gew.-%; ferner 5-40 Gew.-%, bevorzugt 10-25 Gew.-% Lösungsmittel; 10-30 Gew.-%, bevorzugt 15-25 Gew.-% Emulgatoren oder Netzmittel sowie 20-70 Gew.-%, bevorzugt 30-50 Gew.-% Wasser, welches zur Lösung der Bentazon-Salze erforderlich ist.

Das Verhältnis wäßrige zu organische Phase kann in den Formulierungen zwischen 10:1 und 2:1 variieren. Die Wirkstoffkonzentration in der wäßrigen Phase beträgt im allgemeinen zwischen 20 bis 70 Gew.-%, in der organischen Phase zwischen 1 und 80 Gew.-%. Die obere Grenze wird jeweils durch die Löslichkeit des verwendeten Wirkstoffes bestimmt.

Gegenstand der Erfindung ist ferner ein Verfahren zur Herstellung der erfindungsgemäßen Mittel. Hierzu werden die obengenannten Komponenten in den erforderlichen Mengen bei Temperaturen zwischen 10° und 60°C, zweckmäßigerweise bei Raumtemperatur oder leicht darüber in eine Zone hoher Turbulenz gebracht, bis sich die gewünschte stabile transparente Mikroemulsion gebildet hat.

Zur praktischen Durchführung des Verfahrens wird zunächst aus der Bentazon-Salz-Lösung, dem Netzmittel und gegebenenfalls zusätzlichem Wasser die wäßrige Phase hergestellt. Danach wird der zu emulgierende in Wasser unlösliche Wirkstoff in dem organischen Lösungsmittel gelöst und mit den Emulgator-Anteilen versetzt. Die so entstandene organische Phase läßt man dann langsam unter kräftigem Rühren in die wäßrige Phase fließen. Die anfangs milchige Makroemulsion geht nach einiger Zeit in eine transparente Mikroemulsion über.

Das Dispergieren kann gegebenenfalls auch durch einen Schüttelvorgang oder einen statischen Mischer erfolgen und wird zweckmäßigerweise so lange fortgesetzt, bis die Zubereitung in sich homogen ist. Der Dispergiervorgang wird zweckmäßigerweise bei Raumtemperatur durchgeführt, kann aber auch in der Kälte oder bei erhöhten Temperaturen erfolgen.

Die folgenden Beispiele sollen die vorliegende Erfindung näher erläutern.

### Formulierungsbeispiele

### Beispiel 1

54 Gew.-% einer wäßrigen Bentazon-Na-Salz-Lösung (53 %ig) werden mit 10 Gew.-% eines Fettalkoholpolyglykolethers (mit 8 EO) versetzt und solange gerührt, bis sich das Netzmittel klar gelöst hat. 3 Gew.-% Fenthiaprop-ethyl werden in 10 Gew.-% eines Aromaten-Gemisches (Siedebereich 219°C-282°C) und 3 Gew.-% Cyclohexanon gelöst, mit 10 Gew.-% Fettsäurepolyglykolester (mit 40 EO) und 10 Gew.-% eines Fettalkoholpolyglykoläthers (mit 6 EO) versetzt und kurze Zeit bis zur Schlierenfreiheit gerührt. Danach setzt man diese organische Phase langsam unter kräftigem Rühren der wäßrigen Phase zu. Die anfangs milchige Emulsion geht nach kurzer Zeit in eine transparente Mikroemulsion über. Die Zubereitung ist chemisch und anwendungstechnisch stabil.

### Beispiel 2

42 Gew.-% einer 53 %igen wäßrigen Bentazon-Na-Salz-Lösung werden mit 6 Gew.-% eines Fettalkoholpolyglykolethers (mit 8 EO) in 24 Gew.-% Wasser versetzt und wie in Beispiel 1 gerührt. 2,2 Gew.-% Fenoxaprop-ethyl werden in 8 Gew.-% eines Aromaten-Gemisches (219°-282°C) gelöst, mit 10 Gew.-% Fettsäurepolyglykolester (mit 40 EO) und 5,8 Gew.-% dodecylbenzolsulfonsaurem Calcium versetzt und kurze Zeit gerührt. Danach setzt man die organische Phase wie in Beispiel 1 angegeben zu und verfährt wie dort angegeben. Die Zubereitung ist chemisch und anwendungstechnisch stabil.

### Beispiel 3

35 Gew.-% einer wäßrigen Bentazon-Dimethylammonium-Salz-Lösung werden mit 10 Gew.-% Wasser wie in Beispiel 1 angegeben gerührt.

5 Gew.-% Diclofop-methyl werden in 17 Gew.-% Xylol und 5 Gew.-% Cyclohexanon gelöst und mit 14 Gew.-% eines Fettsäurepolyglykolesters und 14 Gew.-% dodecylbenzolsulfonsaurem Calcium versetzt und kurze Zeit gerührt.
Danach setzt man die organische Phase wie in Beispiel 1 angegeben zu und verfährt wie dort angegeben.
Die Zubereitung ist chemisch und anwendungstechnisch stabil.

### Beispiel 4

42 Gew.-% einer 53 %igen wäßrigen Bentazon-Na-Salz-Lösung werden mit 24 Gew.-% Wasser versetzt und wie in Beispiel 1 gerührt.
2,2 Gew.-% Fenoxaprop-ethyl werden in 10 Gew.-% eines Aromaten-Gemisches (219°-282°C) gelöst, mit 10 Gew.-% Fettsäurepolyglykolester (mit 40 EO) und 11,8 Gew.-% eines Fettalkoholpolyglykolether (mit 6 EO) versetzt und kurze Zeit gerührt. Danach setzt man die organische Phase wie in Beispiel 1 zu und verfährt wie dort angegeben.
Die Zubereitung ist chemisch und anwendungstechnisch stabil.

## Patentansprüche (Patentansprüche für folgende(n) Vertragsstaat(en): DE, FR, IT)

1. Herbizide Mittel auf der Basis wäßriger konzentrierter Mikroemulsionen, dadurch gekennzeichnet, daß sie
a) einen herbiziden Phenoxyphenoxy- oder Heteroaryloxyphenoxy-carbonsäureester und ein Salz des Herbizids Bentazon (3-Isopropyl-1H-benzo-2,1,3-thiadiazin-4-on 2,2-dioxid) als Wirkstoffe
b) ein oder mehrere Emulgatoren oder Netzmittel der Gruppe dodecylbenzolsulfonsaures Calcium, ethoxyliertes Rizinusöl, der ethoxylierten Nonylphenole, der Alkanolpolyglykolether oder der Fettsäurepolyglykolester,
c) ein oder mehrere organische Lösungsmittel aus der Gruppe der Aromaten oder Ketone und
d) Wasser enthalten.

2. Herbizide Mittel gemäß Anspruch 1, dadurch gekennzeichnet, daß sie als Phenoxyphenoxy- oder Heteroaryloxyphenoxy-carbonsäureester einen Wirkstoff der Gruppe
2-(4-(2,4-Dichlorphenoxy)-phenoxy)-propionsäuremethylester (Diclofop-methyl),
2-(4-(4-Brom-2-chlorphenoxy)-phenoxy)-propionsäuremethylester,
2-(4-(4-Trifluormethylphenoxy)-phenoxy) propionsäuremethylester,
2-(4-(2-Chlor-4-trifluormethylphenoxy)-phenoxy)-propionsäuremethylester,
4-(4-(4-Trifluormethylphenoxy)-phenoxy)pent-2-en-säure ethylester,
2-(4-(3,5-Dichlorpyridyl-2-oxy)-phenoxy)-propionsäureethylester,
2-(4-(3-Chlor-5-trifluormethyl-pyridyl-2-oxy)-phenoxy-propionsäure-methyl- oder 2-ethoxyethylester (Haloxyfopmethyl oder Haloxyfop-2-ethoxyethyl),
2-(4-(3,5-Dichlorpyridyl-2-oxy)-phenoxy)-propionsäurepropargylester,
2-(4-(6-chlorbenzoxazol-2-yl-oxy)-phenoxy)-propionsäureethylester (Fenoxaprop-ethyl),
2-(4-(6-chlorbenzthiazol-2-yl-oxy)-phenoxy)-propionsäureethylester (Fenthiaprop-ethyl),
2-(4-(3-Chlor-5-trifluormethyl-2-pyridyloxy)-phenoxy)-propionsäuremethylester,
2-(4-(5-Trifluormethyl-2-pyridyloxy-)-phenoxy-propionsäurebutylester (Fluazifop-butyl),
2-(4-(6-chlor-2-chinoxalyloxy)-phenoxy-propionsäureethylester (Quizalofop-ethyl) oder
2-(4-(6-fluor-2-chinoxalyloxy)-phenoxy)-propionsäureethylester
jeweils als reine optische Isomeren oder als deren Gemische enthalten.

3. Herbizide Mittel gemäß Anspruch 1, dadurch gekennzeichnet, daß sie den Wirkstoff Diclofop-methyl oder Fenoxaprop-ethyl und das Na-Salz des Bentazon enthalten.

4. Herbizide Mittel gemäß einem oder mehreren der Ansprüche 1 bis 3, dadurch gekennzeichnet, daß sie als Emulgatoren ethoxyliertes Rizinusöl mit 20-60 EO oder ethoxylierte (C₈-C₂₀)Alkanole mit 3-20 EO enthalten.

5. Herbizide Mittel gemäß einem oder mehreren der Ansprüche 1 bis 4, dadurch gekennzeichnet, daß sie
a) 5 bis 50 Gew.-% Wirkstoffe
b) 10 bis 30 Gew.-% Emulgatoren oder Netzmittel
c) 5 bis 40 Gew.-% organische Lösungsmittel und
d) 20 bis 70 Gew.-% Wasser enthalten.

6. Herbizide Mittel gemäß einem oder mehreren der Ansprüche 1 bis 4, dadurch gekennzeichnet, daß sie
a) 20 bis 35 Gew.-% Wirkstoffe
b) 15 bis 25 Gew.-% Emulgatoren oder Netzmittel
c) 10-25 Gew.-% organische Lösungsmittel und
d) 30-50 Gew.-% Wasser enthalten.

7. Verfahren zur Herstellung eines nach einem oder mehreren der Ansprüche 1 bis 6 definierten herbiziden Mittels, dadurch gekennzeichnet, daß man die Komponenten a) bis d) bei einer Temperatur zwischen 10°C und 60°C in eine Zone hoher Turbulenz bringt, bis sich eine stabile transparente Mikroemulsion gebildet hat.

8. Verfahren nach Anspruch 7, dadurch gekennzeichnet, daß man zunächst aus einer wäßrigen Bentazon-Salz-Lösung und dem Netzmittel die wäßrige Phase herstellt und danach die organische Phase, die den wasserunlöslichen Wirkstoff in einem organischen Lösungsmittel gelöst enthält und die mit den Emulgator-Anteilen versetzt worden ist, unter starkem Rühren in die wäßrige Phase fließen läßt.

9. Verwendung eines nach mindestens einem der Ansprüche 1 bis 6 definierten Mittels zur Bekämpfung von Unkräutern.

10. Verwendung nach Anspruch 9 zur Bekämpfung von Unkräutern in Nutzpflanzenkulturen.

## Patentansprüche (Patentansprüche für folgende(n) Vertragsstaat(en): ES)

1. Verfahren zur Herstellung herbizider Mittel auf der Basis wäßriger konzentrierter Mikroemulsionen, dadurch gekennzeichnet, daß man zumindest
a) einen herbiziden Phenoxyphenoxy- oder Heteroaryloxyphenoxy-carbonsäureester und ein Salz des Herbizids Bentazon (3-Isopropyl-1H-benzo-2,1,3-thiadiazin-4-on 2,2-dioxid) als Wirkstoffe
b) ein oder mehrere Emulgatoren oder Netzmittel der Gruppe dodecylbenzolsulfonsaures Calcium, ethoxyliertes Rizinusöl, der ethoxylierten Nonylphenole, der Alkanolpolyglykolether oder der Fettsäurepolyglykolester,
c) ein oder mehrere organische Lösungsmittel aus der Gruppe der Aromaten oder Ketone und
d) Wasser zu einer Mikroemulsion vermischt.

2. Verfahren nach Anspruch 1, dadurch gekennzeichnet, daß man als Phenoxyphenoxy- oder Heteroaryloxyphenoxycarbonsäureester einen Wirkstoff der Gruppe
2-(4-(2,4-Dichlorphenoxy)-phenoxy)-propionsäuremethylester (Diclofop-methyl),
2-(4-(4-Brom-2-chlorphenoxy)-phenoxy)-propionsäuremethylester,
2-(4-(4-Trifluormethylphenoxy)-phenoxy)-propionsäuremethylester,
2-(4-(2-Chlor-4-trifluormethylphenoxy)-phenoxy)-propionsäuremethylester,
4-(4-(4-Trifluormethylphenoxy)-phenoxy)pent-2-en-säureethylester,
2-(4-(3,5-Dichlorpyridyl-2-oxy)-phenoxy)-propionsäureethylester,
2-(4-(3-Chlor-5-trifluormethyl-pyridyl-2-oxy)-phenoxy-propionsäure-methyl- oder 2-ethoxyethylester (Haloxyfopmethyl oder Haloxyfop-2-ethoxyethyl),
2-(4-(3,5-Dichlorpyridyl-2-oxy)-phenoxy)-propionsäurepropargylester,
2-(4-(6-Chlorbenzoxazol-2-yl-oxy)-phenoxy)-propionsäureethylester (Fenoxaprop-ethyl),
2-(4-(6-Chlorbenzthiazol-2-yl-oxy)-phenoxy)-propionsäureethylester (Fenthiaprop-ethyl),
2-(4-(3-Chlor-5-trifluormethyl-2-pyridyloxy)-phenoxy)-propionsäuremethylester,
2-(4-(5-Trifluormethyl-2-pyridyloxy-)-phenoxy-propionsäurebutylester (Fluazifop-butyl),
2-(4-(6-Chlor-2-chinoxalyloxy)-phenoxy-propionsäureethylester (Quizalofop-ethyl) oder
2-(4-(6-Fluor-2-chinoxalyloxy)-phenoxy)-propionsäureethylester
jeweils als reine optische Isomeren oder als deren Gemische einsetzt.

3. Verfahren nach Anspruch 1, dadurch gekennzeichnet, daß man den Wirkstoff Diclofop-methyl oder Fenoxaprop-ethyl und das Na-Salz des Bentazon einsetzt.

4. Verfahren nach einem oder mehreren der Ansprüche 1 bis 3, dadurch gekennzeichnet, daß man als Emulgatoren ethoxyliertes Rizinusöl mit 20-60 EO oder ethoxylierte (C₈-C₂₀)Alkanole mit 3-20 EO einsetzt.

5. Verfahren nach einem oder mehreren der Ansprüche 1 bis 4, dadurch gekennzeichnet, daß man
a) 5 bis 50 Gew.-% Wirkstoffe
b) 10 bis 30 Gew.-% Emulgatoren oder Netzmittel
c) 5 bis 40 Gew.-% organische Lösungsmittel und
d) 20 bis 70 Gew.-% Wasser, jeweils bezogen auf das Gewicht der Mikroemulsion, einsetzt.

6. Verfahren nach einem oder mehreren der Ansprüche 1 bis 4, dadurch gekennzeichnet, daß man
a) 20 bis 35 Gew.-% Wirkstoffe
b) 15 bis 25 Gew.-% Emulgatoren oder Netzmittel
c) 10-25 Gew.-% organische Lösungsmittel und
d) 30-50 Gew.-% Wasser einsetzt.

7. Verfahren nach mindestens einem der Ansprüche 1 bis 6, dadurch gekennzeichnet, daß man die Komponenten a) bis d) bei einer Temperatur zwischen 10°C und 60°C in eine Zone hoher Turbulenz bringt, bis sich eine stabile transparente Mikroemulsion gebildet hat.

8. Verfahren nach Anspruch 7, dadurch gekennzeichnet, daß man zunächst aus einer wäßrigen Bentazon-Salz-Lösung und dem Netzmittel die wäßrige Phase herstellt und danach die organische Phase, die den wasserunlöslichen Wirkstoff in einem organischen Lösungsmittel gelöst enthält und die mit den Emulgator-Anteilen versetzt worden ist, unter starkem Rühren in die wäßrige Phase fließen läßt.

9. Verwendung eines nach mindestens einem der Ansprüche 1 bis 6 hergestellten Mittels zur Bekämpfung von Unkräutern.

10. Verwendung nach Anspruch 9 zur Bekämpfung von Unkräutern in Nutzpflanzenkulturen.

## Claims (Claims for the following Contracting State(s): DE, FR, IT)

1. A herbicidal agent on the basis of aqueous concentrated microemulsions, containing
a) a herbicidal phenoxyphenoxy - or heteroaryloxyphenoxy-carboxylic acid ester and a salt of the herbicide bentazone (3-isopropyl-1H-benzo-2,1,3-thiadiazin-4-one 2,2-dioxide) as active substances,
b) one or more emulsifiers or wetting agents from the group calcium dodecylbenzenesulfonate, ethoxylated castor oil, the ethoxylated nonylphenols, the alkanol polyglycol ethers or the fatty acid polyglycol esters,
c) one or more organic solvents from the group of the aromatics or ketones and
d) water.

2. A herbicidal agent as claimed in claim 1, containing as the phenoxyphenoxy- or heteroaryloxyphenoxy-carboxylic acid ester an active substance from the group
methyl 2-(4-(2,4-dichlorophenoxy)phenoxy)propionate (diclofop-methyl),
methyl 2-(4-(4-bromo-2-chlorophenoxy)phenoxy)-propionate,
methyl 2-(4-(4-trifluoromethylphenoxy)phenoxy)-propionate,
methyl 2-(4-(2-chloro-4-trifluoromethylphenoxy)-phenoxy)-propionate,
ethyl 4-(4-(4-trifluoromethylphenoxy)phenoxy)pent-2-enoate,
ethyl 2-(4-(3,5-dichloropyrid-2-yloxy)phenoxy)propionate,
methyl or 2-ethoxyethyl 2-(4-(3-chloro-5-trifluoromethylpyrid-2-yloxy)phenoxypropionate (haloxyfop-methyl or haloxyfop-2-ethoxyethyl),
propargyl 2-(4-(3,5-dichloropyrid-2-yloxy)phenoxy)-propionate
ethyl 2-(4-(6-chlorobenzoxazol-2-yloxy)phenoxy)-propionate (fenoxaprop-ethyl),
ethyl 2-(4-(6-chlorobenzothiazol-2-yloxy)phenoxy)-propionate (fenthiaprop-ethyl),
methyl 2-(4-(3-chloro-5-trifluoromethyl-2-pyridyloxy)-phenoxy)propionate
butyl 2-(4-(5-trifluoromethyl-2-pyridyloxy)phenoxypropionate (fluazifop-butyl),
ethyl 2-(4-(6-chloro-2-quinoxalyloxy)phenoxypropionate (quizalofop-ethyl) and
ethyl 2-(4-(6-fluoro-2-quinoxalyloxy)phenoxy)-propionate,
either as pure optical isomers or as mixtures thereof.

3. A herbicidal agent as claimed in claim 1, containing the active substance diclofop-methyl or fenoxapropethyl and the sodium salt of bentazone.

4. A herbicidal agent as claimed in one or more of claims 1 to 3, containing, as emulsifiers, ethoxylated castor oil having 20-60 EO or ethoxylated (C₈-C₂₀) alkanols having 3-20 EO.

5. A herbicidal as claimed in one or more of claims 1 to 4, containing
a) 5 to 50% by weight of active substances,
b) 10 to 30% by weight of emulsifiers or wetting agents,
c) 5 to 40% by weight of organic solvents and
d) 20 to 70% by weight of water.

6. A herbicidal agent as claimed in one or more of claims 1 to 4, containing
a) 20 to 35% by weight of active substances,
b) 15 to 25% by weight of emulsifiers or wetting agents,
c) 10-25% by weight of organic solvents and
d) 30-50% by weight of water.

7. A process for the preparation of a herbicidal agent as defined in one or more of claims 1 to 6, which comprises transferring the components a) to d) to a zone of high turbulence at a temperature between 10°c and 60°c, until a stable, transparent microemulsion has formed.

8. The process as claimed in claim 7, wherein the aqueous phase is initially prepared from an aqueous solution of the bentazone salt and the wetting agent, and the organic phase, which contains the water-insoluble active substance dissolved in an organic solvent and to which the emulsifier portions have been added, is then allowed to flow with vigorous stirring into the aqueous phase.

9. The use of an agent as defined in at least one of claims 1 to 6 for controlling weeds.

10. The use as claimed in claim 9 for controlling weeds in crops.

## Claims (Claims for the following Contracting State(s): ES)

1. A process for the preparation of a herbicidal agent on the basis of aqueous concentrated microemulsions, which comprises mixing
a) a herbicidal phenoxyphenoxy- or heteroaryloxyphenoxy-carboxylic acid ester and a salt of the herbicide bentazone (3-isopropyl-1H-benzo-2,1,3-thiadiazin-4-one 2,2-dioxide) as active substances,
b) one or more emulsifiers or wetting agents from the group calcium dodecylbenzesulfonate, ethoxylated castor oil, the ethoxylated nonylphenols, the alkanol polyglycol ethers or the fatty acid polyglycol esters,
c) one or more organic solvents from the group of the aromatics or ketones and
d) water to give a microemulsion.

2. The process as claimed in claim 1, which comprises employing, as the phenoxyphenoxy- or heteroaryloxyphenoxycarboxylic acid ester, an active substance from the group
methyl 2-(4-(2,4-dichlorophenoxy)phenoxy)propionate (diclofop-methyl),
methyl 2-(4-(4-bromo-2-chlorophenoxy)phenoxy)-propionate,
methyl 2-(4-(4-trifluoromethylphenoxy)phenoxy)-propionate,
methyl 2-(4-(2-chloro-4-trifluoromethylphenoxy)phenoxy)-propionate,
ethyl 4-(4-(4-trifluoromethylphenoxy)phenoxy)pent-2-enoate,
ethyl 2-(4-(3,5-dichloropyrid-2-yloxy)phenoxy)propionate,
methyl or 2-ethoxyethyl 2-(4-(3-chloro-5-trifluoromethylpyrid-2-yloxy)phenoxypropionate (haloxyfop-methyl or haloxyfop-2-ethoxyethyl),
propargyl 2-(4-(3,5-dichloropyrid-2-yloxy)phenoxy)-propionate
ethyl 2-(4-(6-chlorobenzoxazol-2-yloxy)phenoxy)-propionate (fenoxaprop-ethyl),
ethyl 2-(4-(6-chlorobenzothiazol-2-yloxy)phenoxy)-propionate (fenthiaprop-ethyl),
methyl 2-(4-(3-chloro-5-trifluoromethyl-2-pyridyloxy)-phenoxy)propionate,
butyl 2-(4-(5-trifluoromethyl-2-pyridyloxy)phenoxypropionate (fluazifop-butyl),
ethyl 2-(4-(6-chloro-2-quinoxalyloxy)phenoxypropionate (quizalofop-ethyl) and
ethyl 2-(4-(6-fluoro-2-quinoxalyloxy)phenoxy)-propionate,
either as pure optical isomers or as mixtures thereof.

3. The process as claimed in claim 1, wherein the active substance diclofop-methyl or fenoxapropethyl and the sodium salt of bentazone are employed.

4. The process as claimed in one or more of claims 1 to 3, wherein, ethoxylated castor oil having 20-60 EO or ethoxylated (C₈-C₂₀) alkanols having 3-20 EO are employed as emulsifiers.

5. The process as claimed in one or more of claims 1 to 4, wherein
a) 5 to 50% by weight of active substances,
b) 10 to 30% by weight of emulsifiers or wetting agents,
c) 5 to 40% by weight of organic solvents and
d) 20 to 70% by weight of water, in each case based on the weight of the microemulsion, are employed.

6. The process as claimed in one or more of claims 1 to 4, wherein
a) 20 to 35% by weight of active substances,
b) 15 to 25% by weight of emulsifiers or wetting agents,
c) 10-25% by weight of organic solvents and
d) 30-50% by weight of water are employed.

7. The process as claimed in one or more of claims 1 to 6, wherein the components a) to d) are transferred to a zone of high turbulence at a temperature between 10°c and 60°c, until a stable, transparent microemulsion has formed.

8. The process as claimed in claim 7, wherein the aqueous phase is initially prepared from an aqueous solution of the bentazone salt and the wetting agent, and the organic phase, which contains the water-insoluble active substance dissolved in an organic solvent and to which the emulsifier portions have been added, is then allowed to flow with vigorous stirring into the aqueous phase.

9. The use of an agent prepared as clalimed in at least one of claims 1 to 6 for controlling weeds.

10. The use as claimed in claim 9 for controlling weeds in crops.

## Revendications (Revendications pour l'(les) Etat(s) contractant(s) suivant(s): DE, FR, IT)

1. Produits herbicides à base de micro-émulsions aqueuses concentrées, produits caractérisés en ce qu'ils comprennent :
a) comme matières actives un herbicide qui est un ester d'acide phénoxy-phénoxy- ou hétéroaryloxy-phénoxy-carboxylique et un sel de l'herbicide bentazon (2,2-dioxyde de 3-isopropyl-1H-benzo-2,1,3-thiadiazin-4-one),
b) un ou plusieurs émulsionnants ou agents mouillants pris parmi le dodécylbenzène-sulfonate de calcium, de l'huile de ricin éthoxylée, des nonylphénols éthoxylés, des éthers polyglycoliques d'alcanols et des esters polyglycoliques d'acides gras,
c) un ou plusieurs solvants organiques, hydrocarbures aromatiques et/ou cétones, et
d) de l'eau.

2. Produits herbicides selon la revendication 1, caractérisés en ce qu'ils comprennent comme ester d'acide phénoxy-phénoxy- ou hétéroaryloxy-phénoxy-carboxylique l'une des matières actives suivantes :
2-(4-(2,4-Dichlorophénoxy)-phénoxy)-propionate de méthyle (Diclofop-méthyle),
2-(4-(4-Bromo-2-chlorophénoxy)-phénoxy)-propionate de méthyle,
2-(4-(4-Trifluorométhylphénoxy)-phénoxy)-propionate de méthyle,
2-(4-(2-Chloro-4-trifluorométhylphénoxy)-phénoxy)-propionate de méthyle,
4-(4-(4-Trifluorométhylphénoxy)-phénoxy)penténoate d'éthyle,
2-(4-(3,5-Dichloropyridyl-2-oxy)-phénoxy)-propionate d'éthyle,
2-(4-(3-Chloro-5-trifluorométhyl-pyridyl-2-oxy)-phénoxy-propionate de méthyle ou de 2-éthoxyethyte (Haloxyfop-méthyle ou Haloxyfop-2-éthoxy-éthyle),
2-(4-(3,5-Dichloropyridyl-2-oxy)-phénoxy)-propionate de propargyle,
2-(4-(6-Chlorobenzoxazol-2-yl-oxy)-phénoxy)-propionate d'éthyle (Fénoxaprop-éthyle),
2-(4-(6-Chlorobenzothiazol-2-yl-oxy)-phénoxy)-propionate d'éthyle (Fenthiaprop-éthyle),
2-(4-(3-Chloro-5-trifluorométhyl-2-pyridyloxy)-phénoxy)-propionate de méthyle,
2-(4-(5-Trifluorométhyl-2-pyridyloxy)-phénoxy-propionate de butyle (Fluazifop-butyle),
2-(4-(6-Chloro-2-quinaxozalyloxy)-phénoxy-propionate d'éthyle (Quizalofop-éthyle),
2-(4-(6-Fluoro-2-quinoxalyloxy)-phénoxy)-propionate d'éthyle,
en isomères optiques purs ou en mélanges de leurs isomères.

3. Produits herbicides selon la revendication 1, caractérisés en ce qu'ils contiennent la matière active dichlofop-méthyle ou fénoxaprop-éthyle et le sel sodique du bentazon.

4. Produits herbicides selon une ou plusieurs des revendications 1 à 3, caractérisés en ce qu'ils contiennent comme émulsionnants de l'huile de ricin éthoxylée à 20-60 motifs d'oxyde d'éthylène ou des alcanols en C₈-C₂₀ éthoxylés à 3-20 motifs d'oxyde d'éthylène.

5. Produits herbicides selon une ou plusieurs des revendications 1 à 4, caractérisés en ce qu'ils contiennent :
a) de 5 à 50% en poids des matières actives,
b) de 10 à 30% en poids d'émulsionnants ou d'agents mouillants,
c) de 5 à 40% en poids de solvant organique, et
d) de 20 à 70% en poids d'eau.

6. Produits herbicides selon une ou plusieurs des revendications 1 à 4, caractérisés en ce qu'ils contiennent :
a) de 20 à 35% en poids des matières actives,
b) de 15 à 25% en poids d'émulsionnants ou d'agents mouillants,
c) de 10 à 25% en poids de solvant organique, et
d) de 30 à 50% en poids d'eau.

7. Procédé de préparation d'un produit herbicide tel que défini à une ou plusieurs des revendications 1 à 6, procédé caractérisé en ce que l'on porte en forte turbulence les composants a) à d) à une température de 10 à 60°C jusqu'à ce qu'il se soit formé une micro-émulsion transparente stable.

8. Procédé selon la revendication 7, caractérisé en ce que l'on commence par former la phase aqueuse avec une solution aqueuse du sel de bentazon puis on lui ajoute sous une forte agitation la phase organique contenant en solution dans un solvant organique la matière active insoluble dans l'eau, additionnée de la proportion d'émulsionnant.

9. L'emploi d'un produit herbicide tel que défini à l'une quelconque des revendications 1 à 6 pour lutter contre des mauvaises herbes et plantes adventices.

10. Emploi selon la revendication 9 pour lutter contre des mauvaises herbes dans des cultures.

## Revendications (Revendications pour l'(les) Etat(s) contractant(s) suivant(s): ES)

1. Procédé de préparation de produits herbicides à base de micro-émulsions aqueuses concentrées, procédé caractérisé en ce que l'on mélange, pour en faire une micro-émulsion, au moins :
a) comme matières actives un herbicide qui est un ester d'acide phénoxy-phénoxy- ou hétéroaryloxy-phénoxy-carboxylique et un sel de l'herbicide bentazon (2,2-dioxyde de 3-isopropyl-1H-benzo-2,1,3-thiadiazin-4-one),
b) un ou plusieurs émulsionnants ou agents mouillants pris parmi le dodécylbenzène-sulfonate de calcium, de l'huile de ricin éthoxylée, des nonylphénols éthoxylés, des éthers polyglycoliques d'alcanols et des esters polyglycoliques d'acides gras,
c) un ou plusieurs solvants organiques, hydrocarbures aromatiques et/ou cétones, et
d) de l'eau.

2. Procédé selon la revendication 1, caractérisé en ce que l'ester d'acide phénoxy-phénoxy- ou hétéroaryloxy-phénoxy-carboxylique est pris parmi les suivants :
2-(4-(2,4-Dichlorophénoxy)-phénoxy)-propionate de méthyle (Diclofop-méthyle),
2-(4-(4-Bromo-2-chlorophénoxy)-phénoxy)-propionate de méthyle,
2-(4-(4-Trifluorométhylphénoxy)-phénoxy)-propionate de méthyle,
2-(4-(2-Chloro-4-trifluorométhylphénoxy)-phénoxy)-propionate de méthyle,
4-(4-(4-Trifluorométhylphénoxy)-phénoxy)penténoate d'éthyle,
2-(4-(3,5-Dichloropyridyl-2-oxy)-phénoxy)-propionate d'éthyle,
2-(4-(3-Chloro-5-trifluorométhyl-pyridyl-2-oxy)-phénoxy-propionate de méthyle ou de 2-éthoxyéthyte (Haloxyfop-méthyle ou Haloxyfop-2-éthoxy-éthyle),
2-(4-(3,5-Dichloropyridyl-2-oxy)-phénoxy)-propionate de propargyle,
2-(4-(6-Chlorobenzoxazol-2-yl-oxy)-phénoxy)-propionate d'éthyle (Fénoxaprop-éthyle),
2-(4-(6-Chlorobenzothiazol-2-yl-oxy)-phénoxy)-propionate d'éthyle (Fenthiaprop-éthyle),
2-(4-(3-Chloro-5-trifluorométhyl-2-pyridyloxy)-phénoxy)-propionate de méthyle,
2-(4-(5-Trifluorométhyl-2-pyridyloxy)-phénoxy-propionate de butyle (Fluazifop-butyle),
2-(4-(6-Chloro-2-quinaxozalyloxy)-phénoxy-propionate d'éthyle (Quizalofop-éthyle),
2-(4-(6-Fluoro-2-quinoxalyloxy)-phénoxy)-propionate d'éthyle,
en isomères optiques purs ou en mélanges de leurs isomères.

3. Procédé selon la revendication 1, caractérisé en ce que l'on utilise la matière active dichlofop-méthyle ou fénoxaprop-éthyle avec le sel sodique du bentazon.

4. Procédé selon une ou plusieurs des revendications 1 à 3, caractérisé en ce que l'on utilise comme émulsionnants de l'huile de ricin éthoxylée à 20-60 motifs d'oxyde d'éthylène ou des alcanols en C₈-C₂₀ éthoxylés à 3-20 motifs d'oxyde d'éthylène.

5. Procédé selon une ou plusieurs des revendications 1 à 4, caractérisé en ce que l'on utilise :
a) de 5 à 50% des matières actives,
b) de 10 à 30% d'émulsionnants ou d'agents mouillants,
c) de 5 à 40% de solvant organique, et
d) de 20 à 70% d'eau,
toutes proportions rapportées au poids de la micro-émulsion.

6. Procédé selon une ou plusieurs des revendications 1 à 4, caractérisé en ce que l'on utilise :
a) de 20 à 35% en poids des matières actives,
b) de 15 à 25% en poids d'émulsionnants ou d'agents mouillants,
c) de 10 à 25% en poids de solvant organique, et
d) de 30 à 50% en poids d'eau.

7. Procédé selon l'une au moins des revendications 1 à 6, caractérisé en ce que l'on porte en forte turbulence les composants a) à d) à une température de 10 à 60°C jusqu'à ce qu'il se soit formé une micro-émulsion transparente stable.

8. Procédé selon la revendication 7, caractérisé en ce que l'on commence par former la phase aqueuse avec une solution aqueuse du sel de bentazon et l'agent mouillant puis on lui ajoute sous une forte agitation la phase organique contenant en solution dans un solvant organique la matière active insoluble dans l'eau, additionnée de la proportion d'émulsionnant.

9. L'emploi d'un produit herbicide obtenu selon l'une quelconque des revendications 1 à 8 pour lutter contre des mauvaises herbes et plantes adventices.

10. Emploi selon la revendication 9 pour lutter contre des mauvaises herbes dans des cultures.
